# EUROPEAN PATENT APPLICATION

(11) **EP 4 424 535 A1**
(43) Date of publication of application: **04.09.2024**
(21) Application number: 23831245.8
(22) Date of filing: 21.06.2023
(51) Int. Cl.: B60J 5/10

(54) **VEHICULAR BACK DOOR**

(30) Priority: 28.06.2022 JP 2022103844
(71) Applicant: Resonac Corporation, Tokyo 105-7325 (JP)
(72) Inventor: UKIHASHI, Naoki, Tokyo 105-8518 (JP); IWABUCHI, Masayoshi, Tagawa-shi, Fukuoka 825-0005 (JP)
(74) Representative: Hoffmann Eitle
(86) International application number: PCT/JP2023/023025
(87) International publication number: WO 2024/004799

(57) **Abstract**

A vehicular back door including a first panel that is made from resin, a second panel that is made from resin and that includes a recess that is open toward the first panel, a first adhesive that joins together the first panel and the second panel, and a bracket that is a separate member from each of the first panel and the second panel, and that is disposed inside the recess.

## Description

### Technical Field

The present disclosure relates to a vehicular back door.

### Background Art

Hitherto, a resin-made back door for closing off an openable/closeable back door opening formed in a rear wall of a vehicle body of a vehicle is known, such as described in Japanese Patent No. 6884466. The body of the back door may be configured by joining together a resin-made inner panel and a resin-made outer panel using an adhesive. Hereafter an inner panel and an outer panel will sometimes be collectively referred to simply by "panel members".

In an operation to join two panel members together, for example, first an adhesive is disposed on a planned adhesion region pre-set on a join face of one of the panel members. Then a join face of the other panel member is caused to approach the planned adhesion region on the surface of the one panel member by movement along a pre-set approach direction.

As a result of this approach, the join face of the other panel member contacts peaks in the adhesive, and the join faces of the two panel members are superimposed on each other. After the join faces have been superimposed the two panel members are joined together by the adhesive curing.

A technology related to joining using adhesive is disclosed in Japanese Patent No. 6884466. In this technology a recess on an outer panel that is open toward an inner panel, and a protruding portion on the inner panel that corresponds to the recess of the outer panel, are joined together a position of an eave part on a rear spoiler section of a back door outer panel. The protruding portion of the inner panel includes an inclined surface inclined with respect to a horizontal direction along the approach direction of the two panel members. The inclined surface includes a horizontal component along the approach direction, and a perpendicular component that intersects perpendicularly with the horizontal direction. Japanese Patent No. 6884466 describes the adhesive strength between the inner panel and the outer panel being raised by the inclined surface including the perpendicular component being included in an adhesion region of the join section.

Patent Document 1: Japanese Patent No. 6884466

### SUMMARY OF INVENTION

### Technical Problem

When the two panel members approach each other in the joining operation, a state might arise in which the two panel members rub against each other while a surface of the other panel member has contacted the adhesive on the surface of the one panel member. Note that in the present specification "two panel members rub against each other" includes both a state in which the join faces of the respective panel members move relative to each other without adhesive interposed between the two panel members, and a state in which the join faces of the two panel members move relative to each other with adhesive interposed between the two panel members.

Due to the two panel members rubbing against each other, a state might arise in which the adhesive on the surface of the panel member is pulled, or a state might arise in which adhesive taken off from the adhesive region. The adhesive would accordingly be locally deformed, with this possibly resulting in a groove being formed between the surface of the adhesive at the deformed position and the join face of the panel member after the adhesive has cured. Such a formed groove forms a pathway for water such as rain to pass through, with a concern that this might lead to a drop in waterproofness in the adhesion region of the back door.

With regard to this point, even when the protruding portion of the inner panel has an inclined surface including a perpendicular component such as described in Japanese Patent No. 6884466, this does not mean that rubbing together of the two panel members during the superimposing operation can always be avoided. This means that a groove might be formed by deformation of the adhesive in the adhesion region of the join section between the two panel members in Japanese Patent No. 6884466. As a result thereof, ingress of water passing through the groove formed in the adhesion region into an interior space of the back door is not always able to be suppressed.

The present disclosure has focused on the above issues, and provides a vehicular back door capable of improving the waterproofness of an adhesion region in a join section of a back door.

### Solution to Problem

Specific means to achieve the above objectives are set out below.
<1> A vehicular back door including:
   a first panel that is made from resin;
   a second panel that is made from resin and that includes a recess that is open toward the first panel;
   a first adhesive that joins together the first panel and the second panel; and
   a bracket that is a separate member from each of the first panel and the second panel, and that is disposed inside the recess.
<2> The vehicular back door according to <1>, wherein:
   the bracket is sandwiched between the first panel and the second panel;
   the vehicular back door further includes
   a second adhesive that joins together the bracket and the first panel, and
   a third adhesive that joins together the bracket and the second panel; and
      the second adhesive and the third adhesive are linked to the first adhesive.

The present disclosure enables provision of a vehicular back door capable of improving the waterproofness of an adhesion region of a join section of a back door.

### BRIEF DESCRIPTION OF DRAWINGS

Fig. 1 is a cross-section to explain a vehicular back door according to an exemplary embodiment of the present disclosure.
Fig. 2 is a perspective view to explain a vehicular back door according to the present exemplary embodiment.
Fig. 3 is an exploded assembly diagram to explain a vehicular back door according to the present exemplary embodiment.
Fig. 4 is a front view to explain a vehicular back door according to the present exemplary embodiment.
Fig. 5 is a cross-section to explain a vehicular back door according to a comparative example.
Fig. 6A is a cross-section to explain a state of adhesive deformation when a protruding portion of a first panel is inserted into a recess of a second panel in a vehicular back door according to a comparative example.
Fig. 6B is a cross-section to explain a state in which a groove has been formed at a portion where adhesive has deformed in a vehicular back door according to a comparative example.

### DESCRIPTION OF EMBODIMENTS

Description follows regarding an exemplary embodiment of the present disclosure. Similar reference numerals are appended to similar portions in the following description of the drawings. However, the drawings are merely schematic, and relations between thickness and plane dimensions, and ratios of thicknesses in each device and each member, differ from actual ratios. This means that the specific thicknesses and dimensions should be determined while referring to the following description. Moreover, there are also portions where the relationship of dimensions and ratios differ from each other between the respective drawings. Moreover, unless explicitly stated otherwise in the present specification, there is no limitation to there being one item of each configuration element in the present disclosure, and there may be plural present thereof.

### Vehicular Back Door

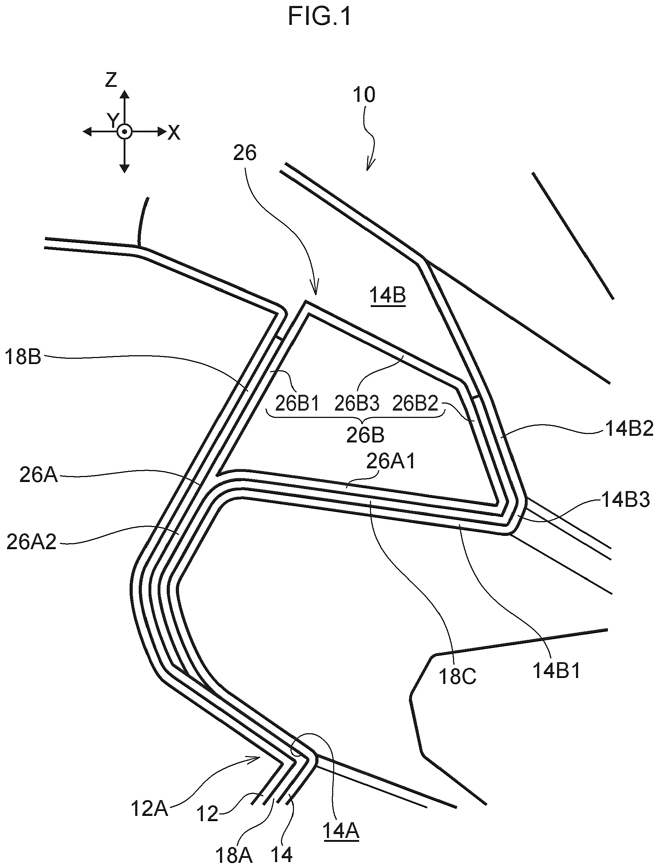

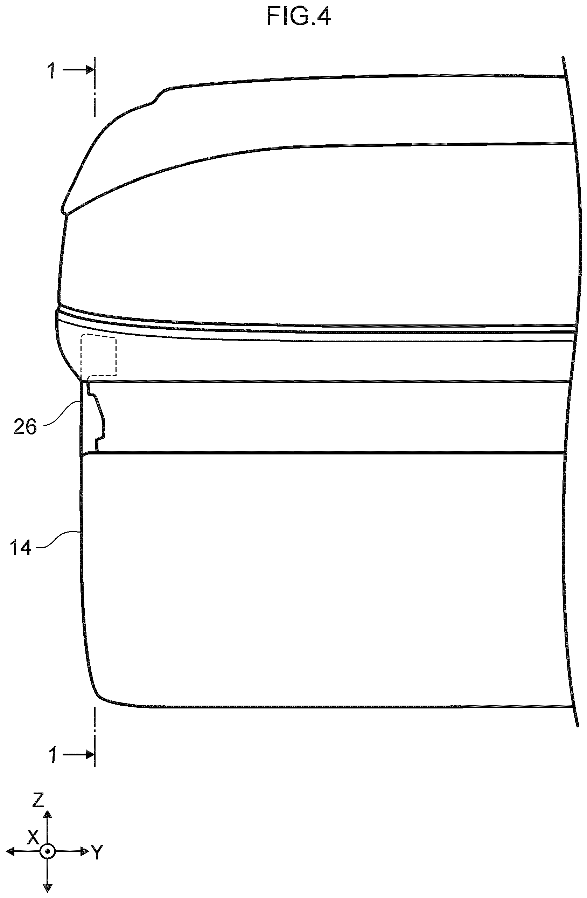

Description follows regarding a vehicular back door 10 according to the present exemplary embodiment, with reference to Fig. 1 to Fig. 4. Fig. 1 is a cross-section taken along line 1-1 of Fig. 4. As illustrated in Fig. 1, the vehicular back door 10 according to the present exemplary embodiment includes a first panel 12, a second panel 14, a first adhesive 18A, a second adhesive 18B, a third adhesive 18C, and brackets 26. Note that for ease of explanation, hereafter vehicular back door is sometimes simply referred to as "back door".

The back door 10 is provided so as to be capable of opening and closing an opening in a rear section of a vehicle body of a vehicle. A front-rear direction X and an up-down direction Z of the vehicle body are each indicated by two directional arrows in Fig. 1. A vehicle body width direction Y intersects perpendicularly with both the front-rear direction X and the up-down direction Z.

### Panel Members

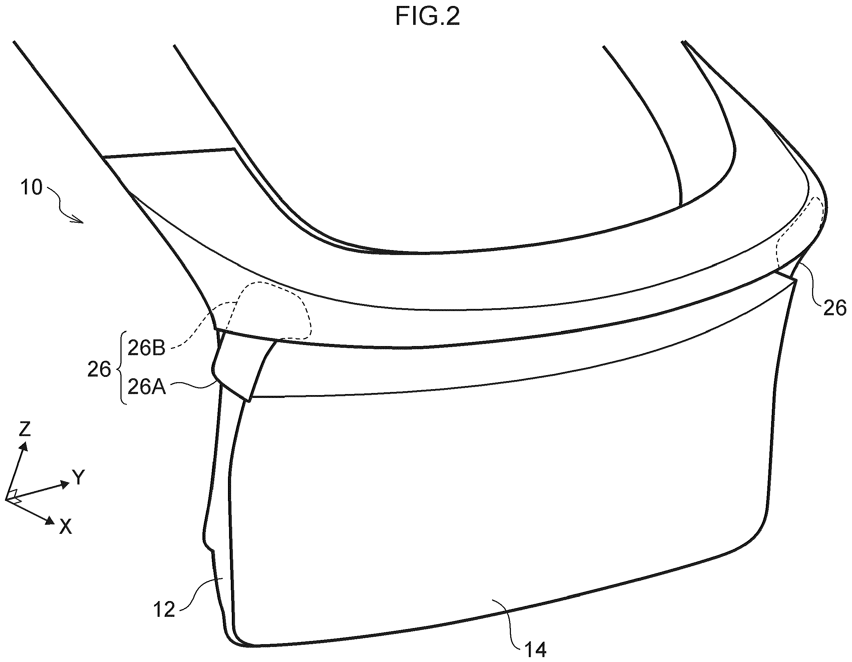

As illustrated in Fig. 2, the first panel 12 and the second panel 14 are both members that configure the back door 10. Both the first panel 12 and the second panel 14 are made from resin and, for example, may be molded using an injection molding machine. Specifically, a glass fiber composite polypropylene material containing glass fiber at a specific content by weight % may, for example, be employed in the first panel 12. A polypropylene material compounded with talc or rubber may, for example, be employed in the second panel 14.

Note that in the present disclosure the resin material employed to mold the panel members is not particularly limited. The resin employed as the resin material is, for example, preferably at least one resin selected from the group consisting of a polypropylene (PP) resin, a polypropylene composite (PPC) resin, and an Acrylonitrile-Butadiene-Styrene copolymer (ABS) co-polymer resin.

In the present exemplary embodiment the first panel 12 is an inner panel, and the second panel 14 is an outer panel. However, in the present disclosure the first panel may be an outer panel, and the second panel may be an inner panel. Moreover, a shape and plate thickness of the first panel 12 can be freely set according to the desired design. Similarly, the shape and plate thickness of the second panel 14 can be freely set according to the desired design.

### Recess

The second panel 14 includes two recesses that open toward the first panel 12. Specifically, in the present exemplary embodiment the second panel 14 includes a first recess 14A positioned at a lower side in Fig. 1, and a second recess 14B positioned at an upper side in Fig. 1. In other words, there are two protruding portions that protrude toward a right side of the front-rear direction X in Fig. 1, namely toward a rear side of the vehicle, disposed in a row along the up-down direction Z on the outer panel of the second panel 14 of the present exemplary embodiment. Note that in the present disclosure the number of individual recesses formed to the panel member can be set freely to any number of one or greater.

The second recess 14B of the present exemplary embodiment includes a first side wall 14B1, a second side wall 14B2, and a bottom 14B3. The first side wall 14B1 is inclined downward from the horizontal direction on progression toward the right side of the front-rear direction X in Fig. 1.

In the present exemplary embodiment, the first side wall 14B1 and the second side wall 14B2 in the second recess 14B approach each other on progression toward the bottom 14B3. Note that the shape of the recess can be freely set in the present disclosure. For example, a pair of side walls may separate from each other on progression toward the bottom.

As illustrated in Fig. 1, a portion of the first panel 12 facing toward the second recess 14B of the second panel 14 is flat. Namely, the first panel 12 does not follow the shape of the second recess 14B of the second panel 14.

However, a portion of the first panel 12 facing toward the first recess 14A of the second panel 14 follows the shape of the first recess 14A. Fig. 1 illustrates an example in which the first recess 14A of the second panel 14 is bent at an angle of substantially 90°, and a first protruding portion 12A of the first panel 12 follows the first recess 14A. Note that in the present disclosure the bend angle of the panel member can be freely set and is not limited to 90°.

### Adhesive

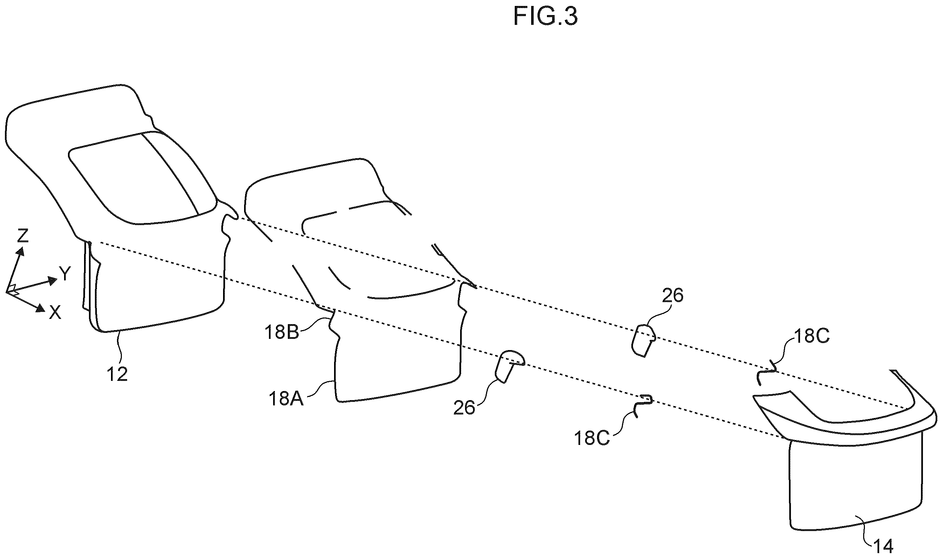

As illustrated in Fig. 3 to Fig. 4, the first adhesive 18A joins together the first panel 12 and the second panel 14. Moreover, although in the present exemplary embodiment an example is illustrated of a state in which two panel members are joined together, in the present disclosure another member may be disposed between the two panel members. Namely, the back door may be configured by indirect joining.

Moreover, in the present exemplary embodiment the second adhesive 18B joins together the brackets 26 and the first panel 12. In the present disclosure, the brackets 26 and the first panel 12 may be joined together by, instead of using the second adhesive 18B, being joined together with welding by thermal welding or ultrasonic welding, for example.

Moreover, in the present exemplary embodiment the third adhesive 18C joins together the brackets 26 and the second panel 14. In the present disclosure, the brackets 26 and the second panel 14 may be joined together by, instead of using the third adhesive 18C, being joined together with welding by thermal welding or ultrasonic welding, for example.

Moreover, in the present exemplary embodiment, the second adhesive 18B and the third adhesive 18C are linked to the first adhesive 18A. In the present disclosure the second adhesive 18B and the third adhesive 18C may be separated from the first adhesive 18A.

Moreover, although in the present exemplary embodiment an example is illustrated of a state in which the panel members and the brackets 26 are joined together, the present disclosure encompasses indirect joining that is a state in which another member is disposed between the panel members and the brackets.

### Brackets

The brackets 26 are made from resin, and may also be molded using an injection molding machine, for example. Specifically, an Acrylate Styrene Acrylonitrile (ASA) resin may, for example, be employed in the brackets 26 of the present exemplary embodiment. Note that in the present disclosure the resin material employed to mold the bracket is not particularly limited.

The brackets 26 are separate members from each of the first panel 12 and the second panel 14. The brackets 26 are interposed between the first panel 12 and the second panel 14. Namely, the brackets 26 couple together the first panel 12 and the second panel 14. Each of the brackets 26 includes a base 26A and a protrusion 26B.

### Base

The base 26A is a plate shaped member made from resin. The base 26A includes a first base portion 26A1 to be positioned on the inside of the second recess 14B, and a second base portion 26A2 that is contiguous to the first base portion 26A1 and bends around at a left end of the first base portion 26A1 and extends downward as illustrated in Fig. 1. The first base portion 26A1 extends along a side wall of the second recess 14B of the second panel 14 in Fig. 1. The second base portion 26A2 extends along the first panel 12 and the second panel 14 at a lower side of the second recess 14B in Fig. 1.

### Protrusion

In the present exemplary embodiment the protrusion 26B is a plate shaped member made from resin. In the present disclosure the material of the protrusion 26B may be any material capable of being joined to the panel members, and may be a metal, for example. The protrusion 26B is contiguous to the base 26A, and in a joined state of the bracket 26 and the second panel 14 projects further outside than the j oined member.

The protrusion 26B includes a first wall 26B1, a second wall 26B2, and a lid portion 26B3, as illustrated in Fig. 1. The first wall 26B1 extends upward in Fig. 1 from a position in the vicinity of a boundary between the first base portion 26A1 and the second base portion 26A2 of the base 26A. The second wall 26B2 extends upward from a right end of the first base portion 26A1 of the base 26A in Fig. 1. The lid portion 26B3 links together the first wall 26B1 and the second wall 26B2 at a position on the upper side of and inside the second recess 14B.

The first wall 26B1 is joined to the first panel 12. The second wall 26B2 is joined to the second panel 14. In the present disclosure the lid portion 26B3 may be omitted. The first base portion 26A1 of the base 26A and the protrusion 26B of the bracket 26 are disposed inside the second recess 14B of the second panel 14.

### Joining Operation

Next, description follows regarding a joining operation according to the present exemplary embodiment. In an operation to join the two panel members together, first the third adhesive 18C is disposed on the join face of the second panel 14 in a planned adhesion region pre-set for joining to the bracket 26. The adhesive may, for example, be disposed in a string shape on the planned adhesion region by being externally extruded continuously from inside a nozzle at a leading end of a dedicated tube or hose.

Then the join face of the bracket 26 is caused to approach the planned adhesion region for the bracket 26 on the second panel 14 along the pre-set approach direction. As a result of this approach, the first base portion 26A1 of the base 26A and the protrusion 26B of the bracket 26 are inserted into the second recess 14B of the second panel 14. The join face of the base 26A of the bracket 26, and the join face of the second wall 26B2 of the protrusion 26B are then superimposed on the join face of the second panel 14.

Next, the second adhesive 18B is disposed on a planned adhesion region pre-set for joining to the first panel 12 on the join face of the bracket 26. Moreover, the first adhesive 18A is disposed on a planned adhesion region pre-set for joining to the first panel 12 on the join face of the second panel 14. In the present exemplary embodiment, the first adhesive 18A and the second adhesive 18B are standardized with a single adhesive. Namely, disposing the second adhesive 18B on the planned adhesion region and disposing the first adhesive 18A on the planned adhesion region may be performed continuously. Note that in the present disclosure the first adhesive and the second adhesive may differ from each other.

Next, the join face of the first panel 12 is caused to approach the planned adhesion region for the first panel 12 on the brackets 26 along the pre-set approach direction. In the present exemplary embodiment the approach direction of the first panel 12 is a horizontal direction along the front-rear direction X in Fig. 1. Note that in the present disclosure the approach direction may be freely set. Moreover, the join face of the first panel 12 is caused to approach the planned adhesion region for the first panel 12 on the second panel 14 along an approach direction that is a horizontal direction. As a result of this approach, the first protruding portion 12A of the first panel 12 is inserted into the first recess 14A of the second panel 14.

The join face of the second base portion 26A2 of the base 26A of the bracket 26 and the join face of the first panel 12 are then superimposed on each other. Moreover, the join face of the first wall 26B1 of the protrusion 26B and the join face of the first panel 12 are superimposed on each other. Moreover, the join face at the position of the first recess 14A of the second panel 14 and the join face at the first protruding portion 12A of the first panel 12 are superimposed on each other. The two panel members that have their join faces superimposed on each other are joined together by the adhesive curing. In the present exemplary embodiment, no rubbing together arises between the first panel 12 and the second panel 14 when the first panel 12 is caused to approach the second panel 14 along the horizontal direction, even though each of the brackets 26 is being inserted into the second recess 14B.

### Comparative Example

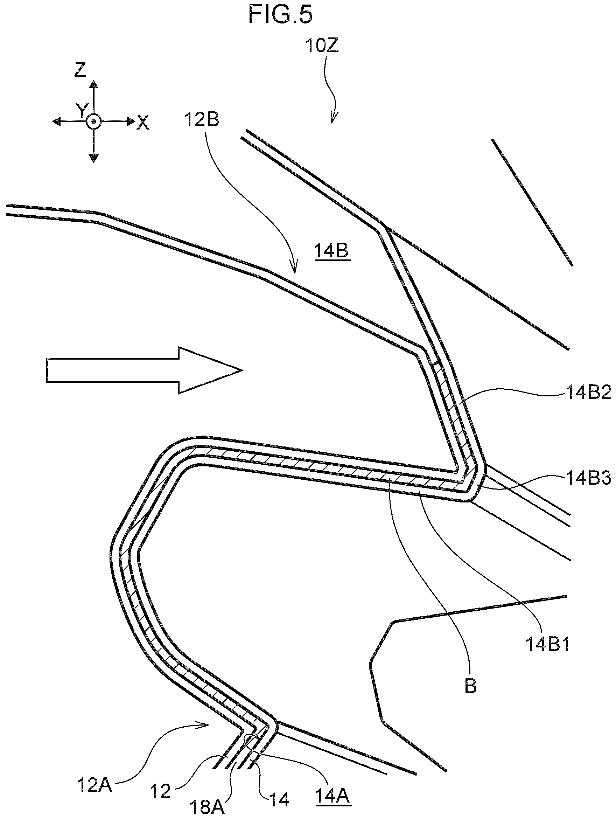

Next, description follows regarding a vehicular back door 10Z according to a comparative example, with reference to Fig. 5 to Fig. 6. Points of difference in the vehicular back door 10Z according to the comparative example compared to the present exemplary embodiment are that the brackets 26 are not provided and that a second protruding portion 12B is provided to the first panel 12. As illustrated in Fig. 5, in the comparative example the second protruding portion 12B is inserted into the second recess 14B when the first panel 12 is caused to approach the second panel 14 along a horizontal direction.

In Fig. 5, an approach direction of the two panel members along the front-rear direction X is indicated by the rightward facing hollow arrow. A first side wall 14B1 at a lower side of the second recess 14B is inclined downward on progression in the front-rear direction X from the left side toward the right side in Fig. 5. This means that when the second protruding portion 12B is being inserted into a second recess 14B, rubbing arises between the first panel 12 and the second panel 14 as in a region B indicated by diagonal shading inside the first adhesive 18A in Fig. 5, and as a result the first adhesive 18A is readily deformed by this rubbing together.

A portion below a lower edge of an opening of the second recess 14B in Fig. 5 is contained in the region B. In vehicular back door 10Z according to the comparative example, a groove acting as a pathway for water may be formed over the entire join face at the region B in the join section. Namely, in cross-section, suppose imaginary lines are set extending along the approach direction from edges of the opening of the recess, then when superimposing the two panel members deformation is liable to occur at the adhesive on the side wall of the recess and at the adhesive on the bottom side of the recess at portions positioned outside the recess from the imaginary lines.

Moreover, in the comparative example, the first protruding portion 12A of the first panel 12 needs to be inserted into the first recess 14A at a lower side of the second recess 14B of the second panel 14 in Fig. 5. This means that it is difficult to avoid rubbing together of the two panel members due to causing the second protruding portion 12B of the first panel 12 to approach the first side wall 14B 1 of the second panel 14 in a head-on direction, namely from an upper side toward the lower side in Fig. 5.

Note that although a pathway for water formed in the adhesion region is expressed as being a groove in the present exemplary embodiment, in the present disclosure an expression other than groove may be employed for the pathway for water, such as an intermittent gap for example. Namely, the expression for a pathway for water is not dependent on how it looks in plan view, or how it looks in cross-section.

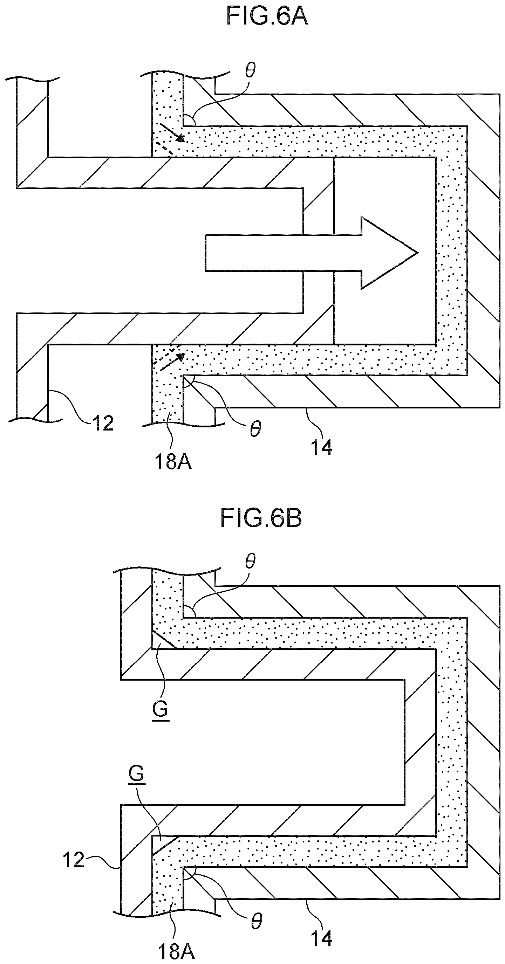

Moreover, an example is illustrated in Fig. 5 of a state in which a leading end of the protruding portion of the first panel 12 is inclined downward from the horizontal direction, namely, a state in which the leading end of the protruding portion is inclined in a direction intersecting with the approach direction of the two panel members. However, as illustrated in Fig. 6A, the first adhesive 18A may be pulled toward the inside of the recess of the second panel 14 at a position of the opening in the recess even in a state in which the leading end of the protruding portion of the first panel 12 has a form along the approach direction of the two panel members.

Fig. 6A illustrates an example in which the approach direction of the two panel members is indicated by a rightward facing hollow arrow. In the recess of the second panel 14 in Fig. 6A, an upstand angle θ from an opening edge of a side wall at a position of the opening of the recess is substantially 90°. Due to the first adhesive 18A being pulled toward the inside of the recess of the second panel 14, a groove G is formed in an adhesion region between the two panel members at a position of the opening of the recess as illustrated in Fig. 6B. Note that the groove G is even more liable to be formed when the upstand angle θ is less than 90°.

### Operation and Advantageous Effects

In the back door 10 according to the present exemplary embodiment, the second panel 14 includes the second recess 14B opening toward the first panel 12, and also the bracket 26 is disposed inside the second recess 14B. In the present exemplary embodiment, there is no protruding portion formed to the first panel 12 for fitting into the second recess 14B, with this meaning that deformation at the surface of the adhesive due to rubbing together of the two panel members is not liable to arise in a superposition operation. The waterproofness of the adhesion region in the join section of the back door 10 is accordingly improved.

Moreover, in the present exemplary embodiment the bracket 26 is a separate member to both the first panel 12 and the second panel 14. This increases the degrees of freedom for design of the panel members during design of the panel member by an amount commensurate with not needing a protruding portion.

Moreover, in the present exemplary embodiment the joining between the bracket 26 and the first panel 12 is performed using the second adhesive 18B, and the joining between the bracket 26 and the second panel 14 is performed using the third adhesive 18C. The second adhesive 18B and the third adhesive 18C are linked to the first adhesive 18A. Namely, an operation to join together the three members of the first panel 12, the second panel 14, and the bracket 26 is standardized in the point that adhesive is employed therefor. This thereby enables the overall operational efficiency to be improved in the joining operation.

### Other Exemplary Embodiments

Although the present disclosure has been described using the exemplary embodiments disclosed above, the statements and drawings that make up part of this disclosure should not be understood as being limitations to the present disclosure.

For example, the present disclosure is not limited to a back door of a vehicle and is, for example, applicable to adhesion regions of panel portions made from resin in various vehicle components such as a bumper, a side mudguard, a fender, a back door garnish, a spoiler, and a radiator. Moreover, the present disclosure is not limited to vehicle components and is, for example, applicable to adhesion regions of panel portions made from resin configuring various structural bodies other than a vehicle, such as railway equipment or a building. The present disclosure includes various exemplary embodiments not described above, and the technical scope of the present disclosure is determined from the above description by the invention determining matter in the scope of the appropriate patent claims.

The entire content of the disclosure of Japanese Patent Application No. 2022-103844 filed on June 28, 2022 is incorporated by reference in the present specification.

Moreover, all publications, patent applications and technical standards mentioned in the present specification are incorporated by reference in the present specification to the same extent as if each individual publication, patent application, or technical standard was specifically and individually indicated to be incorporated by reference.

### Explanation of Reference Numerals

- 10: vehicular back door
- 10Z: vehicular back door
- 12: first panel
- 12A: first protruding portion
- 12B: second protruding portion
- 14: second panel
- 14A: first recess
- 14B: second recess
- 14B1: first side wall
- 14B2: second side wall
- 14B3: bottom
- 18A: first adhesive
- 18B: second adhesive
- 18C: third adhesive
- 26: bracket
- 26A: base
- 26A1: first base portion
- 26A2: second base portion
- 26B: protrusion
- 26B1: first wall
- 26B2: second wall
- 26B3: lid portion
- B: region
- G: groove
- X: front-rear direction
- Y: width direction
- Z: up-down direction
- θ: upstand angle

## Claims

1. A vehicular back door, comprising:
a first panel that is made from resin;
a second panel that is made from resin and that includes a recess that is open toward the first panel;
a first adhesive that joins together the first panel and the second panel; and
a bracket that is a separate member from each of the first panel and the second panel, and that is disposed inside the recess.

2. The vehicular back door according to claim 1, wherein:
the bracket is sandwiched between the first panel and the second panel;
the vehicular back door further comprises:
a second adhesive that joins together the bracket and the first panel, and
a third adhesive that joins together the bracket and the second panel; and the second adhesive and the third adhesive are linked to the first adhesive.
